# EUROPÄISCHE PATENTSCHRIFT

(11) **EP 0 983 721 B1**
(45) Veröffentlichungstag und Bekanntmachung des Hinweises auf die Patenterteilung: **02.10.2002**
(21) Anmeldenummer: 99113472.7
(22) Anmeldetag: 13.07.1999
(51) Int. Cl.: A01F 15/08

(54) **Messvorrichtung zur Bestimmung der Länge einzelner quaderförmiger Ballen und für einen Ballenstrang**
Measuring device for determining the length of single square bales and for a series of bales
Dispositif de mesure pour déterminer la longueur des balles carrées individuelles et pour une série de balles

(30) Priorität: 04.08.1998 DE 19835165
(43) Veröffentlichungstag der Anmeldung: 08.03.2000
(73) Patentinhaber: Case Harvesting Systems GmbH, 01844 Neustadt (DE)
(72) Erfinder: Gottlöber, Dietrich, Dipl.-Ing., 01844 Neustadt (DE)
(74) Vertreter: Müller, Lutz

(56) Entgegenhaltungen:
- EP-A- 0 573 342
- DE-U- 29 511 023
- GB-A- 810 775
- US-A- 5 783 816

## Beschreibung

Die Erfindung betrifft eine Meßvorrichtung zur Bestimmung der Länge für einzelne quaderförmige Ballen und für einen Ballenstrang in einer Ballenpresse, insbesondere einer Großballenpresse, zur Ernte land- und forstwirtschaftlicher Kulturen und sogenannter nachwachsender Rohstoffe, mit den Merkmalen nach dem Oberbegriff des Patentanspruches 1.

Von den zu verpressenden landwirtschaftlichen Erntegütern dient z. B. Stroh einmal als Düngergrundlage für landwirtschaftlich und gärtnerisch genutzte Flächen oder als Einstreu in der Tierhaltung. Zum anderen wird es heute auch in ganz erheblichem Maße einer industriellen Verwertung zur Herstellung anderweitiger Produkte, wie zum Beispiel für Verpackungsmaterial, Füllstoffe, Dämmstoffe etc. zugeführt.
Zunehmend werden auch Heu und Welkgut für die Bevorratung und für Silage zu Ballen verpreßt, die eine effektivere Bewirtschaftung in der Tierhaltung gestatten.
Durch die Vielzahl genannter Verwertungsmöglichkeiten ist es notwendig, die Ballen an die Endverbraucher oft über weite Strecken zu transportieren, wozu aus Kostengründen die maximale Auslastung der eingesetzten Transportkapazitäten dringend geboten ist. Dafür ist die Kenntnis der Länge der Ballen im Endzustand die wichtigste Größe, da die Breite und die Höhe der Ballen bauartbedingt durch die Ballenpresse unveränderbar vorgegeben sind. Bei mit sogenannten Großballenpressen hergestellten Ballen ist logischer Weise die genaue Kenntnis der Länge der Ballen und die mögliche Einflußnahme zur Variation derselben von besonderer Bedeutung. Darüber hinaus befindet sich eine Vielzahl der Ballenpressen im überbetrieblichen Einsatz oder bei Lohnunternehmern.

Dort ist es besonders wichtig, daß dem Betreiber exakte und zuverlässige Angaben zur Berechnung der geleisteten Arbeiten vorliegen, wozu die Länge der gepreßten Ballen eine wesentliche Kenngröße ist.
Eine Ausführung einer Meßvorrichtung zur Bestimmung der Länge quaderförmiger Ballen in einer Ballenpresse ist mit der EP 0 573 342 B1 bekannt geworden, die von gewissen Unterschieden bei der Ermittlung des Längenmaßes abgesehen heute noch am häufigsten in Großballenpressen anzutreffen ist. Sie verwendet ein unmittelbar hinter der Bindeeinrichtung und oberhalb des Preßkanals angeordnetes und drehbar gelagertes Sternrad, das mit seinen Zackenspitzen mit der Oberseite der Ballen im Eingriff steht. Während der dadurch verursachten Rotation des Sternrades werden von einem fest in der Ballenpresse installierten Zählinstrument die Anzahl der vorbeilaufenden Zackenspitzen gezählt. Im genannten Meßbereich hinter der Bindeeinrichtung führen die Ballen jedoch beim Rückhub des Preßkolbens eine große Rückdehnung aus, die ebenfalls vom Sternrad mitgemacht und damit auch gezählt wird. Dabei ist es nicht möglich, die Zählimpulse einer Vorwärtsbewegung von einer Rückwärtsbewegung zu unterscheiden, so daß dadurch ein verfälschter Meßwert entsteht. Ein weiterer Nachteil der beschriebenen Meßanordnung besteht darin, daß die Länge der Ballen an einer Stelle gemessen wird, wo sie noch unter Druck stehen. Da sie erst nach dem Verlassen des Preßkanals auf ihre endgültige Länge expandieren, ergeben sich noch zusätzlich Ungenauigkeiten. Als Maß zur Berechnung der geleisteten Arbeit einer Ballenpresse beim überbetrieblichen Betreiber einer Ballenpresse oder beim Lohnunternehmer dient dieses ungenaue Längenmaß, das mit der von einem weit verbreiteten Ballenzähler gelieferten Anzahl Ballen multipliziert wird. Dieses Verfahren kann natürlich weder den Lohnunternehmer noch den Kunden befriedigen.

In einer weiteren Ausführung einer Meßvorrichtung zur Bestimmung der Ballenlänge gemäß der DE 37 22 741 A1 bzw. der DE 38 09 132 C1 wird vorgeschlagen, die Hubzahl des Preßkolbens als Meßgröße zur Ermittlung der Ballenlänge heranzuziehen. Hierbei wird davon ausgegangen, daß die mit jedem Hub des Preßkolbens erreichte Verschiebung des Ballens eine konstante Größe darstellt, so daß aus der Verschiebung pro Hub und der Anzahl der Hübe des Preßkolbens die exakte Länge eines Ballens ermittelt werden soll. Aus der Praxis ist es jedoch bekannt, daß sich die zu verarbeitenden Erntegüter nicht gleichstark verdichten lassen. Weiterhin kann nicht davon ausgegangen werden, daß als Folge unterschiedlicher Erntegutschwaden eine absolut gleichmäßig vorgepreßte Befüllung der Preßkammer bei jedem Hub des Preßkolbens erreicht wird. Somit ist es nicht möglich, anhand der vorgeschlagenen Meßgrößen eine Ermittlung der Ballenlänge mit hinreichender Genauigkeit durchzuführen. Da auch hier nur die Arbeitsleistung der Ballenpresse über die ungenaue Länge der Ballen multipliziert mit ihrer Anzahl ausgewiesen werden kann, ist auch dieses Verfahren unakzeptabel.
Schließlich ist noch mit dem DE 295 11 023 U1 eine gegenüber den vorstehend erläuterten Meßvorrichtungen etwas verbesserte Lösung bekannt geworden. Hier ist die Meßvorrichtung im hinteren Bereich des Preßkanals nahe seiner Austrittsöffnung angeordnet. Sie ist um eine horizontal und quer zum Preßkanal zeigende Achse entgegen der Federkraft einer Zugfeder schwenkbar gelagert. Ihr Meßwertaufnehmer besteht dabei aus einem Sternrad und einem Zählrad, die innerhalb von Seitenlaschen gelagert sind. Das Sternrad rollt auf der Oberseite der Ballen ab und treibt dabei das Zählrad an. Durch die Verbindung des Sternrades mit dem Zählrad mittels einer Mitnehmerkupplung wird erreicht, daß bei einer Drehung des Sternrades entgegen dem Uhrzeigersinn bei nach links in der Bildebene fahrender Ballenpresse das Zählrad ebenfalls in Drehung versetzt wird, während bei einer Drehung des Sternrades im Uhrzeigersinn das Zählrad stehen bleibt. Damit das Zählrad auf keinen Fall eine Drehung im Uhrzeigersinn ausführen kann, wird das Zählrad kontinuierlich durch eine Bremsvorrichtung abgebremst. Trotz des Ausschaltens der Ungenauigkeiten in der Messung aufgrund der Rückdehnung der Ballen arbeitet diese Meßvorrichtung bei weitem noch nicht exakt genug, da durch die Messung der Ballenlänge an der Stelle der maximalen Klemmung der Ballen im Preßkanal dieser Wert nicht repräsentativ für die tatsächliche Ballenlänge sein kann. Erfahrungsgemäß expandieren Ballen in der Länge erst nach Verlassen des Preßkanals je nach Erntegutart und dem augenblicklichen Feuchtigkeitsgehalt wenigstens zwischen 10 % bis 15 %. Obwohl diese Meßvorrichtung fortlaufend die Länge des die Ballenpresse verlassenden Ballenstranges mißt, ist sie zur Bestimmung der Tagesleistung einer Ballenpresse durch ihre Ungenauigkeit auch nicht zu empfehlen.

Deshalb liegt der Erfindung die Aufgabe zugrunde, eine Meßvorrichtung zur Bestimmung der Länge für einzelne quaderförmige Ballen und für einen Ballenstrang in einer Ballenpresse zu schaffen, die exakte Meßwerte liefert.
Diese Aufgabe wird durch den Gegenstand des Patentanspruches 1 gelöst, wobei in den darauf bezogenen Unteransprüchen Merkmale aufgeführt sind, die diese Lösung in vorteilhafter Weise weiterentwickeln und auf die hier deshalb ausdrücklich verwiesen wird.
Durch die erfindungsgemäße Anordnung des Meßaufnehmers an der Aufnahmeeinrichtung wird die Länge der einzelnen Ballen bzw. des fortlaufend gebildeten Ballenstranges nach dem Expandieren außerhalb des Preßkanals gemessen.

Diese vorteilhafte Anordnung bringt immer den gleichen Erfolg, ganz gleich, ob die Aufnahmeeinrichtung als Rollenschurre, Laderutsche oder als Ballenakkumulator ausgebildet ist.
Ebenso verhält es sich mit dem Ort der Anbringung des Meßaufnehmers innerhalb der Aufnahmeeinrichtung, denn er kann zweckmäßigerweise in deren Vorderteil bzw. ganz hinten an der Abkippkante angeordnet sein. In beiden Fällen passieren die Ballen bzw. der Ballenstrang den Meßaufnehmer in ihrer endgültigen Länge.
Beim Einsatz einer Rollenschurre bietet es sich an, den Meßaufnehmer konzentrisch an einer Rolle anzubringen.
Darüber hinaus hat es sich bewährt, zwei voneinander beabstandete Meßaufnehmer an der Aufnahmeeinrichtung anzuordnen, die unabhängig voneinander messen, wodurch unterschiedliche Längen einzelner Ballen über deren Breite festgestellt werden können.
Zweckmäßigerweise sollte der Meßaufnehmer aus einem großen Sternrad und einem kleineren Zählrad bestehen, die konzentrisch zueinander angeordnet und fest miteinander verbunden sind. Das große Sternrad ist dabei mit seinen Zacken mit den Ballen bzw. dem Ballenstrang im Eingriff und ermittelt dadurch deren Vorschubweg. Diesen überträgt es an das Zählrad, das am Umfang gleichmäßig verteilte Aussparungen besitzt. Im Bereich dieser Aussparungen ist eine lagefixierter Sensor befestigt, der die Anzahl der sich vorbeibewegenden Aussparungen zählt. Zur Erhöhung der Meßgenauigkeit sollte die Anzahl der Aussparungen wesentlich größer als die Anzahl der Zacken des Sternrades sein.
Der wesentlichste Vorteil der erfindungsgemäßen Meßvorrichtung ist, daß sie die Länge einzelner Ballen und auch die Länge des Ballenstranges über einen vorbestimmbaren Zeitraum unverfälscht und damit exakt mißt.

Darüber hinaus ist sie bei einer Anbringung in der Abkippkante in der Lage, die Länge des soeben abgelegten Einzelballens zu messen, weil das Sternrad unmittelbar nach der Feldablage des Ballens kurzzeitig stehen bleibt. Aber auch eine Anordnung des Meßaufnehmers im Vorderteil bietet diese Möglichkeit, wenn der Meßvorrichtung beispielsweise den Ballen abtastende Schalter dessen Anfang und Ende signalisieren.
Die erfinderungsgemäße Meßvorrichtung ist umgedreht auch vorteilhafterweise dafür nutzbar, die Ballenlänge zu regeln, indem die Bindeeinrichtung immer erst nach einer vorgegebenen Anzahl von Aussparungen ausgelöst wird. Beim Vorhandensein einer Anzeigeeinrichtung ist es mit dieser Meßvorrichtung möglich, jeweils die Länge des gerade auf dem Feld abgelegten Ballens und kumulativ die aktuelle Länge des Ballenstranges von einem vorbestimmbaren Zeitpunkt ab anzuzeigen.

Die Erfindung soll nun anhand von zwei Ausführungsbeispielen näher erläutert werden, wobei die einzelnen Figuren zeigen:
- Fig. 1:: die Seitenansicht einer Ballenpresse mit einem Ballen auf der als Rollenschurre ausgebildeten Aufnahmeeinrichtung im Augenblick des Abkippens auf das Feld, wobei ein Meßaufnehmer im Bereich der Abkippkante angeordnet ist,
- Fig. 2:: eine vergrößerte Darstellung der Rollenschurre mit einem Meßaufnehmer im Vorderteil,
- Fig. 3:: eine vergrößerte Darstellung der Rollenschurre nach Fig. 1,

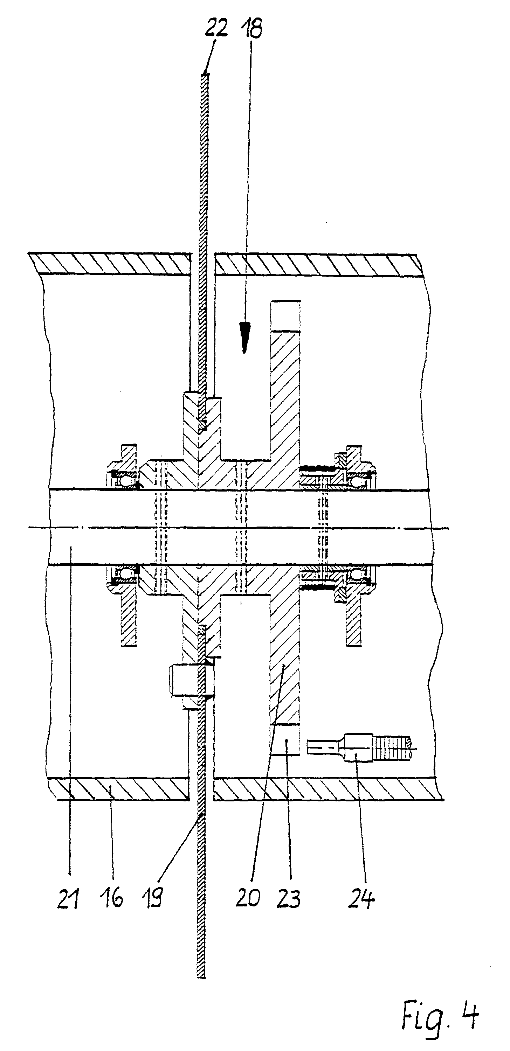

- Fig. 4:: einen Schnitt durch einen Meßaufnehmer nach Fig. 3.

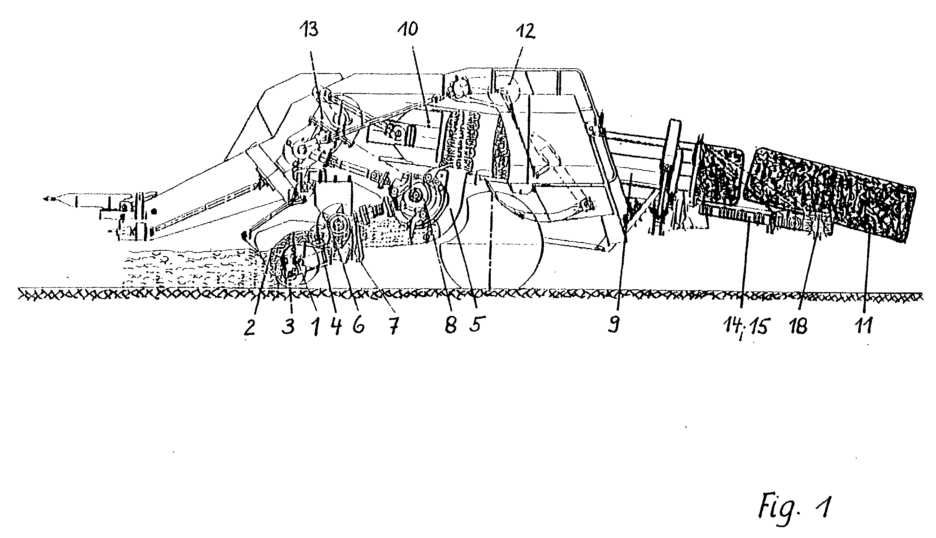

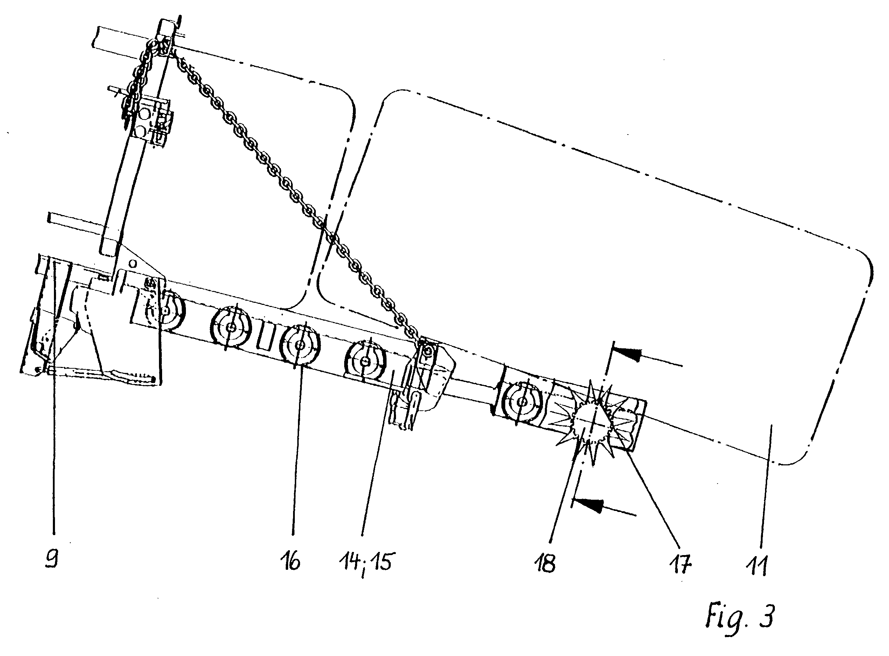

In Figur 1 ist eine Ballenpresse in der Seitenansicht mit teilweise weggelassener Verkleidung zum Erkennen der wichtigsten Funktionsorgane gezeigt. Sie ist an ihrer Frontseite mit einer breiten Pick-up 1 ausgestattet, die das im Schwad liegende Erntegut mit ihren Zinken 2 vom Erdboden aufnimmt, wobei sie mit Laufrädern 3 geführt wird. Über und hinter ihr ist links und rechts je ein Querförderschneckenstück 4 zum Zusammenführen des Erntegutes auf die Breite des nachfolgenden Zuführkanals 5 angeordnet. In diesem Bereich befindet sich noch ein Schneidrotor 6, der mit einschwenkbaren Schneidmessern 7 zusammenarbeitet, um das Erntegut in Stücke zu schneiden. Der Zuführkanal 5 wird von einem Förderrotor 8 mit Erntegut befüllt und danach in einem Hub in den Preßkanal 9 entleert. Dort wird es durch den Preßkolben 10 im Strangpreßverfahren zu Ballen 11 verpreßt, die durch eine Bindeeinrichtung 12 mit mehreren Lagen Bindegarn zusammengebunden werden. Der Antrieb sämtlicher Funktionsorgane erfolgt von einem Hauptgetriebe 13 aus, das vom Zapfwellenanschluß eines nicht dargestellten Traktors aus angetrieben wird.
An das hintere Ende des Preßkanals 9 ist eine als Rollenschurre 14 ausgebildete Aufnahmeeinrichtung 15 so angebaut, daß sie die Verlängerung des Bodens des Preßkanals 9 darstellt. Die Ballen 11 werden von den Rollen 16 der Rollenschurre 14 solange getragen, bis sie durch Abkippen über die als Abkippkante 17 dienende letzte Rolle 16 auf das Feld fallen. Die Rollenschurre 14 könnte auch problemlos durch eine aus Profilen bestehende Laderutsche oder einen Ballenakkumulator ersetzt werden. Im ersten Ausführungsbeispiel einer Meßvorrichtung zur Bestimmung der Länge der Ballen 11 nach den Figuren 1 und 3 ist der Meßaufnehmer 18 im Bereich der Abkippkante 17 der Rollenschurre 14 angeordnet.

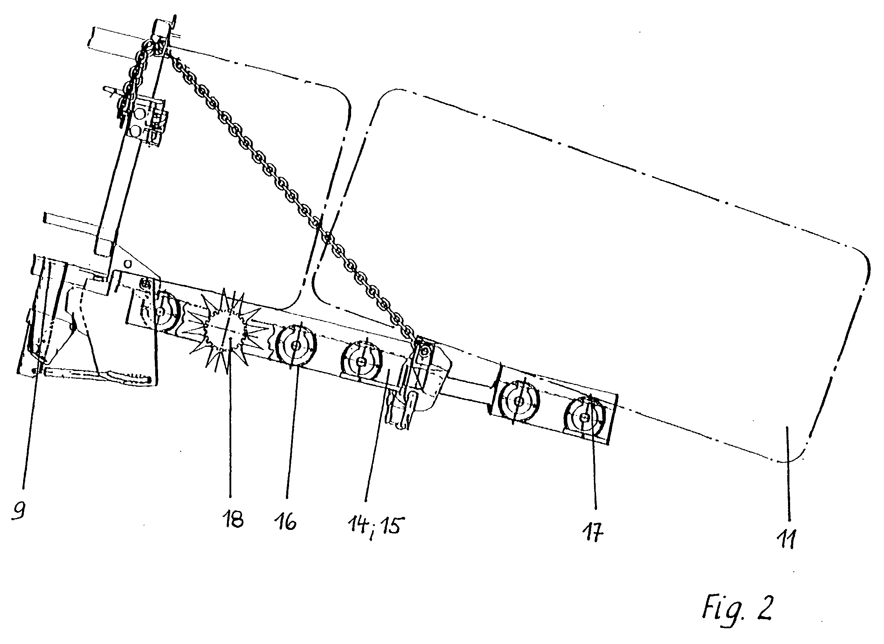

Figur 2 zeigt die zweite Ausführungsvariante, wo sich der Meßaufnehmer 18 in der Aufnahmeeinrichtung 15 in ihrem sich unmittelbar an den Boden des Preßkanals 9 anschließenden Vorderteil befindet.
Vom konstruktiven Aufbau sind die Meßaufnehmer 18 beider Ausführungsbeispiele gleich. Dabei ist der aus einem Sternrad 19 und einem Zählrad 20 bestehende Meßaufnehmer 18 auf die Welle 21 einer Rolle 16 gesteckt. Das Sternrad 19 und das Zählrad 20 können entweder beide mit der Welle 21 verdrehsicher verbunden sein oder sie sind auf dieser drehbar gelagert und miteinander verbunden. Das Sternrad 19 überragt mit seinen Zacken 22 die Rolle 16 zum Zwekke des Eingriffs in den Ballen 11. Das Zählrad 20 ist dagegen innerhalb des Mantels der Rolle 16 angebracht. Es weist gleichmäßig an seinem Umfang verteilte Aussparungen 23 auf, deren Anzahl größer als die der Zacken 22 ist. Im Bereich der Aussparungen 23 befindet sich ein lagefixierter Sensor 24 zum Zählen der Aussparungen 23.

### Bezugszeichenaufstellung

- 1: Pick-up
- 2: Zinken
- 3: Laufrad
- 4: Querförderschneckenstück
- 5: Zuführkanal
- 6: Schneidrotor
- 7: Schneidmesesr
- 8: Förderrotor
- 9: Preßkanal
- 10: Preßkolben
- 11: Ballen
- 12: Bindeeinrichtung
- 13: Hauptgetriebe
- 14: Rollenschurre
- 15: Aufnahmeeinrichtung
- 16: Rolle
- 17: Abkippkante
- 18: Meßaufnehmer
- 19: Sternrad
- 20: Zählrad
- 21: Welle
- 22: Zacken
- 23: Aussparung
- 24: Sensor

## Patentansprüche

1. Meßvorrichtung zur Bestimmung der Länge quaderförmiger Ballen (11) an einer Ballenpresse, die einen Preßkanal (9) aufweist, in dem das Erntegut durch die alternierende Bewegung eines Preßkolbens (10) zu Ballen (11) gepreßt wird, mit einer Bindeeinrichtung (12) zum Umbinden der Ballen (11) vor dem Verlassen der Ballenpresse und einer dem Preßkanal (9) nachgeordneten Aufnahmeeinrichtung (15) für wenigstens einen Ballen (11) vor der Ablage auf dem Feld bzw. vor der Weiterleitung an ein nachfolgendes Gerät, **dadurch gekennzeichnet, daß** an der Aufnahmeeinrichtung (15) ein den Vorschubweg jedes Ballens (11) aufnehmender Meßaufnehmer (18) angeordnet ist.

2. Meßvorrichtung nach Anspruch 1, **dadurch gekennzeichnet, daß** die Aufnahmeeinrichtung (15) eine Rollenschurre (14) ist.

3. Meßvorrichtung nach Anspruch 1, **dadurch gekennzeichnet, daß** die Aufnahmeeinrichtung (15) eine Laderutsche ist.

4. Meßvorrichtung nach Anspruch 1, **dadurch gekennzeichnet, daß** die Aufnahmeeinrichtung (15) ein Ballenakkumulator ist.

5. Meßvorrichtung nach den Ansprüchen 1 bis 4, **dadurch gekennzeichnet, daß** der Meßaufnehmer (18) an der Aufnahmeeinrichtung (15) in einem sich unmittelbar an den Boden des Preßkanals (9) anschließenden Bereich angeordnet ist.

6. Meßvorrichtung nach den Ansprüchen 1 bis 3, **dadurch gekennzeichnet, daß** der Meßaufnehmer (18) im Bereich der Abkippkante (17) der Rollenschurre (14) bzw. der Laderutsche angeordnet ist.

7. Meßvorrichtung nach den Ansprüchen 1, 2, 5 und 6, **dadurch gekennzeichnet, daß** der Meßaufnehmer (18) konzentrisch an einer Rolle (16) der Rollenschurre (14) angeordnet ist.

8. Meßvorrichtung nach den Ansprüchen 1 bis 7, **dadurch gekennzeichnet, daß** an der Rollenschurre (14) bzw. der Laderutsche wenigstens zwei voneinander beabstandet angeordnete und den Ballen (11) in seiner Breite unabhängig voneinander abtastende Meßaufnehmer (18) vorgesehen sind.

9. Meßvorrichtung nach den Ansprüchen 1 bis 8, **dadurch gekennzeichnet, daß** der Meßaufnehmer (18) aus einem Sternrad (19) und einem Zählrad (20) besteht, die verdrehsicher miteinander verbunden sind.

10. Meßvorrichtung nach den Ansprüchen 1 bis 9, **dadurch gekennzeichnet, daß** das Zählrad (20) gleichmäßig am Umfang verteilte Aussparungen (23) aufweist, deren Anzahl größer als die Anzahl der Zacken (22) des Sternrades (19) ist.

11. Meßvorrichtung nach den Ansprüchen 1 bis 10, **dadurch gekennzeichnet, daß** dem Zählrad (20) im Bereich der Aussparungen (23) ein lagefixierter Sensor (24) zum Zählen der Aussparungen (23) zugeordnet ist.

12. Meßvorrichtung nach den Ansprüchen 1 bis 11, **dadurch gekennzeichnet, daß** der Meßaufnehmer (18) mit einer die Länge des gerade auf dem Feld abgelegten Ballens (11) und/oder die aktuelle Länge des Ballenstranges von einem vorbestimmbaren Zeitpunkt an anzeigenden Anzeigeeinrichtung verbunden ist.

## Claims

1. A measuring device for determining the length of rectangular bales (11) on a baling press, which possesses a pressing channel (9), in which the harvested crop is pressed into bales (11) by the reciprocating motion of a ram (10), with a binding device (12) for binding the bales (11) before they leave the baling press, and a receiving device (15) for at least one bale arranged after the pressing channel (9) before it is deposited onto the field or before it is passed on to a subsequent piece of equipment, **characterised in that**, on the pick-up device (15) a measuring sensor (18) is arranged in the feed path of each bale (11).

2. A measuring device in accordance with claim 1, **characterised in that** the receiving device (15) is a roller chute (14).

3. A measuring device in accordance with claim 1, **characterised in that** receiving device (15) is a loading chute.

4. A measuring device in accordance with claim 1, **characterised in that** the receiving device (15) is a bale accumulator.

5. A measuring device in accordance with claims 1 to 4, **characterised in that** the measuring sensor (18) on the receiving device (15) is arranged in the area directly adjoining the bottom of the pressing channel (9).

6. A measuring device in accordance with claims 1 to 3, **characterised in that** the measuring sensor (18) is arranged in the area of the tipping out edge (17) of the roller chute (14) or the loading chute.

7. A measuring device in accordance with claims 1, 2, 5, and 6, **characterised in that** the measuring sensor (18) is arranged concentrically on a roller (16) of the roller chute (14).

8. A measuring device in accordance with claims 1 to 7, **characterised in that** on the roller chute (14) or the loading chute respectively at least two measuring sensors (18) sensing independently of each other the width of the bales arranged at a distance from each other and the bales are envisaged. (11).

9. A measuring device in accordance with claims 1 to 8, **characterised in that** measuring sensor (18) consists of a starwheel (19) and a counting wheel (20), which are connected to each other so that they cannot rotate relative to each other.

10. A measuring device in accordance with claims 1 to 9, **characterised in that** the counting wheel (20) has notches (23) distributed evenly around its circumference, the number of which is greater than the number of teeth (22) on the starwheel (19).

11. A measuring device in accordance with claims 1 to 10, **characterised in that** on the counting wheel (20) in the area of the notches (23) a fixed sensor (24) is arranged for counting the notches (23).

12. A measuring device in accordance with claims 1 to 11, **characterised in that** the measuring sensor (18) is connected with the display device for indicating the length of the bale (11) that has just been deposited on the field and/or the actual length of the string of bales at a predetermined point in time.

## Revendications

1. Dispositif de mesure pour la détermination de la longueur de balles (11) en forme de parallélipipède sur une presse-balloteuse qui présente un canal de compression (9) dans lequel le produit de récolte est comprimé en balles (11) par le mouvement alternatif d'un piston de compression (10), avec un dispositif de liage (12) pour le liage des balles (11) avant leur départ de la presse et un dispositif de reprise (15) disposé derrière le canal de compression (9) pour au moins une balle (11) avant son dépôt sur le champ ou avant son transport ultérieur vers un dispositif suiveur, **caractérisé en ce qu'**un capteur de mesure (18) enregistrant le déplacement de chaque balle (11) est disposé sur le dispositif de reprise (15).

2. Dispositif de mesure selon la revendication 1, **caractérisé en ce que** le dispositif de reprise (15) est une goulotte à rouleaux (14).

3. Dispositif de mesure selon la revendication 1, **caractérisé en ce que** le dispositif de reprise (15) est une glissière de chargement.

4. Dispositif de mesure selon la revendication 1, **caractérisé en ce que** le dispositif de reprise (15) est un accumulateur de balles.

5. Dispositif de mesure selon les revendications 1 à 4, **caractérisé en ce que** le capteur de mesure (18) sur le dispositif de reprise (15) est disposé dans une zone directement contiguë au fond du canal de compression (16).

6. Dispositif de mesure selon les revendications 1 à 3, **caractérisé en ce que** le capteur de mesure (18) est disposé dans la zone du bord de basculement (17) de la goulotte à rouleaux (14) ou de la glissière de chargement.

7. Dispositif de mesure selon les revendications 1, 2, 5 et 6, **caractérisé en ce que** le capteur de mesure (18) est disposé concentriquement sur un rouleau (16) de la goulotte à rouleaux (14).

8. Dispositif de mesure selon les revendications 1 à 7, **caractérisé en ce que** sur la goulotte à rouleaux (14) ou la glissière de chargement au moins deux capteurs de mesure (18) disposés à distance l'un de l'autre sont prévus qui palpent la balle (11) dans le sens de sa largeur indépendamment l'un de l'autre.

9. Dispositif de mesure selon les revendications 1 à 8, **caractérisé en ce que** le capteur de mesure (18) est constitué d'une roue en étoile (19) et d'un disque compteur (20) qui sont reliés l'un à l'autre à calage de rotation.

10. Dispositif de mesure selon les revendications 1 à 9, **caractérisé en ce que** le disque compteur (20) présente des évidements (23) distribués uniformément sur son pourtour et dont le nombre supérieur au nombre de pointes (22) de la roue en étoile (19).

11. Dispositif de mesure selon les revendications 1 à 10, **caractérisé en ce qu'**un capteur (20) fixé à demeure pour le comptage des évidements (23) est relié au disque compteur (24) dans la zone des évidements (23).

12. Dispositif de mesure selon les revendications 1 à 11, **caractérisé en ce que** le capteur de mesure (18) est relié à un dispositif d'affichage indiquant la longueur de la balle (11) qui vient d'être déposée sur le champ et/ou la longueur actuelle de la ligne de balles à partir d'un moment prédéterminé.
